# EUROPÄISCHE PATENTANMELDUNG

(11) **EP 2 733 829 A1**
(43) Veröffentlichungstag der Anmeldung: **21.05.2014**
(21) Anmeldenummer: 12192756.0
(22) Anmeldetag: 15.11.2012
(51) Int. Cl.: H02K 9/06, H02K 15/00

(54) **Bauteil für eine dynamoelektrische Maschine**

(71) Anmelder: Siemens Aktiengesellschaft, 80333 München (DE)
(72) Erfinder: Hansmann, Daniel, 45892 Gelsenkirchen (DE); Jäkel, Christian, 45468 Mülheim an der Ruhr (DE); Kocdemir, Bora, Dr., 45357 Essen (DE); Manev, Mihail, 10789 Berlin (DE); Voß, Simon, Dr., 46049 Oberhausen (DE)

(57) **Zusammenfassung**

Die Erfindung betrifft ein Bauteil für eine dynamoelektrische Maschine, wobei das Bauteil Eisenaluminid (FeAl; bzw. Fe₃Al) aufweist und mittels Metallpulverspritzgießen (metal injection molding) hergestellt wird.

## Beschreibung

Die Erfindung betrifft ein Bauteil für eine dynamoelektrische Maschine und ein Verfahren zur Herstellung eines Bauteils für eine dynamoelektrische Maschine.

Unter einer dynamoelektrischen Maschine wird beispielsweise ein elektrischer Generator verstanden, der zur Umwandlung von Rotationsenergie in elektrische Energie ausgebildet ist. Dazu weist der elektrische Generator eine Stator- und eine Rotorwicklung auf, die sich im Betrieb stark erhitzen. Es sind mehrere Kühlungsmöglichkeiten bekannt. Beispielsweise werden elektrische Generatoren mit Luft, Wasserstoff oder Wasser gekühlt.

Bei einer Kühlung mit Luft oder Wasserstoff wird ein auf dem Rotor angeordnetes ein- oder mehrstufiges Gebläse derart ausgebildet, dass im Betrieb eine Kühlströmung durch den elektrischen Generator ermöglicht wird. Das mehrstufige Gebläse umfasst dazu Gebläse-Laufschaufeln und Gebläse-Leitschaufeln. Das einstufige Gebläse umfasst dazu hingegen nur Gebläse-Laufschaufeln.

Derzeit werden in der Regel die Gebläse-Leitschaufeln aus austenitischem, rostfreiem Stahl und die Gebläse-Laufschaufeln aus martensitischem, rostfreiem Stahl hergestellt. Ein alternatives Herstellungsverfahren für die Gebläseleitschaufeln wäre das Spritzgussverfahren aus glasfaserverstärktem Polyphthalamid. Sofern die Gebläse-Leitschaufel und Gebläse-Laufschaufel aus Stahl hergestellt wird, erfolgt dies durch ein Fräsen aus einem Vollmaterial. Die Herstellungsdauer und die Herstellungskosten für solche gefertigten Gebläse-Leitschaufeln und Gebläse-Laufschaufeln sind vergleichsweise hoch.

Die Erfindung hat es sich zur Aufgabe gemacht eine kostengünstige Möglichkeit anzugeben Gebläse-Leitschaufeln auszubilden.

Gelöst wird dies dadurch, dass ein Bauteil für eine dynamoelektrische Maschine ausgebildet wird, das eine auf Eisenaluminid basierende Legierung umfasst.

Die auf das Verfahren hin gerichtete Aufgabe wird gelöst durch ein Verfahren zur Herstellung eines Bauteils für eine dynamoelektrische Maschine, wobei das Bauteil eine auf Eisenaluminid basierende Legierung umfasst und mittels Metallpulverspritzgießen (Metal Injection Molding) hergestellt wird.

Die Erfindung geht von dem Aspekt aus, dass die Verwendung des Eisenaluminids mit einer speziellen Legierungszusammensetzung, eingebettet in einer Polymermatrix, zu einer kostengünstigen Variante führt gegenüber dem Einsatz von austenitischen bzw. martensitischen, rostfreien Stählen. Eisenaluminid hat den Vorteil der geringeren Dichte und der geringeren Kosten gegenüber Stahl und führt somit zu einer kostengünstigen Lösung.

Des Weiteren weist Eisenaluminid eine höhere Oxidationsbeständigkeit gegenüber Stahl auf.

Vorteilhafte Weiterbildungen sind in den Unteransprüchen angegeben.

So wird in einer ersten vorteilhaften Weiterbildung das Bauteil als Gebläse-Leitschaufel und/oder Gebläse-Laufschaufel ausgebildet.

Die auf das Verfahren hin gerichtete vorteilhafte Weiterbildung kennzeichnet sich dadurch aus, dass das Bauteil als Gebläse-Leitschaufel und/oder Gebläse-Laufschaufel für eine dynamoelektrische Maschine gefertigt wird.

Die vorliegende Erfindung wird nun im Anschluss vollständiger beschrieben, in welche bevorzugten Ausführungsformen der Erfindung gezeigt werden. Diese Erfindung kann jedoch in verschiedenen Formen ausgeführt werden und sollte nicht als auf die nachfolgend dargestellten Ausführungsformen beschränkt verstanden werden. Diese dargestellten Ausführungsformen werden vielmehr bereitgestellt, damit diese Offenlegung gründlich und vollständig ist und dem Fachmann den Umfang der Erfindung vollauf vermittelt.

Ein elektrischer Generator umfasst im Wesentlichen einen Stator, der eine Statorwicklung aufweist und einen drehbar gelagerten Rotor, der eine Rotorwicklung aufweist. Der Rotor rotiert mit einer bestimmten Drehfrequenz innerhalb des Stators. Mit Hilfe der Rotorwicklung wird ein Magnetfeld erzeugt, das durch die Rotationsfrequenz zu einem veränderlichen Magnetfeld innerhalb der Statorwicklung führt, was zu einer Induktion einer elektrischen Spannung führt.

Zur Kühlung weist der Generator ein einstufiges oder mehrstufiges Gebläse auf, das eine Gebläse-Leitschaufel und eine Gebläse-Laufschaufel aufweist. Die Gebläse-Leitschaufel und die Gebläse-Laufschaufel als Ausführungsform eines Bauteils für eine dynamoelektrische Maschine werden durch das Metallpulverspritzgießen hergestellt, was auch unter dem englischen Begriff "Metal injection molding" bekannt ist.

Dieses Bauteil umfasst eine auf Eisenaluminid (FeAl; bzw. Fe₃Al) basierenden Legierung mit einer speziellen Legierungszusammensetzung, eingebettet in einer Polymermatrix. Eisenaluminid hat den Vorteil der geringeren Dichte und geringeren Kosten gegenüber Stahl. Das Bauteil weist Eisenaluminid auf.

Des Weiteren weist ein aus Eisenaluminid hergestelltes Bauteil für eine dynamoelektrische Maschine eine gegenüber Stahl höhere Oxidationsbeständigkeit auf.

Das Metallpulverspritzgießverfahren muss derart ausgebildet und optimiert sein, dass das Bauteil als Gebläse-Leitschaufel oder als Gebläse-Laufschaufel für eine dynamoelektrische Maschine gefertigt werden kann.

## Patentansprüche

1. Bauteil für eine dynamoelektrische Maschine,
wobei das Bauteil eine auf Eisenaluminid basierende Legierung umfasst.

2. Bauteil nach Anspruch 1,
ausgebildet als Gebläse-Leitschaufel oder Gebläse-Laufschaufel.

3. Verfahren zur Herstellung eines Bauteils für eine dynamoelektrische Maschine,
wobei das Bauteil eine auf Eisenaluminid (FeAl; bzw. Fe₃Al) basierende Legierung umfasst und mittels Metallpulverspritzgießen (Metal injetion molding) hergestellt wird.

4. Verfahren nach Anspruch 3,
wobei das Bauteil als Gebläse-Leitschaufel oder Gebläse-Laufschaufel für eine dynamoelektrische Maschine gefertigt wird.
